(19) Europäisches Patentamt
European Patent Office
Office européen des brevets

(11) Veröffentlichungsnummer: **0 544 318 B1**

# (12) EUROPÄISCHE PATENTSCHRIFT

(45) Veröffentlichungstag der Patentschrift: **08.02.95**

(51) Int. Cl.$^{6}$: **C08K 9/04**, C08L 83/04

(21) Anmeldenummer: **92120290.9**

(22) Anmeldetag: **27.11.92**

Die Akte enthält technische Angaben, die nach dem Eingang der Anmeldung eingereicht wurden und die nicht in dieser Patentschrift enthalten sind.

## (54) Einkomponenten-RTV-Massen.

(30) Priorität: **28.11.91 DE 4139148**

(43) Veröffentlichungstag der Anmeldung:
**02.06.93 Patentblatt 93/22**

(45) Bekanntmachung des Hinweises auf die Patenterteilung:
**08.02.95 Patentblatt 95/06**

(84) Benannte Vertragsstaaten:
**AT BE CH DE FR GB IT LI NL SE**

(56) Entgegenhaltungen:
**EP-A- 0 188 285** **US-A- 3 845 161**
**US-A- 4 111 890** **US-A- 4 141 751**
**US-A- 4 164 509** **US-A- 4 871 616**

**W. Noll, Chemistry and Technology of Silicones, Academic Press, Inc., San Diego 1968, Seite 403**

(73) Patentinhaber: **WACKER-CHEMIE GMBH**
**Hanns-Seidel-Platz 4**
**D-81737 München (DE)**

(72) Erfinder: **Barthel, Herbert, Dr.**
**Untere Dorfstrasse 13**
**W-8261 Emmerting (DE)**
Erfinder: **Graf, Werner, Dr.**
**Ludwig-Thoma-Strasse 21**
**W-8263 Burghausen (DE)**

**EP 0 544 318 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft unter Ausschluß von Wasser lagerfähige, bei Zutritt von Wasser bei Raumtemperatur zu Elastomeren vernetzende Massen, sogenannte Einkomponenten-RTV-Massen, hergestellt durch Vermischen von

(1) kondensationsfähige Endgruppen aufweisendem Organopolysiloxan mit

(2) je Molekül mindestens drei direkt an Silicium gebundene hydrolysierbare Gruppen aufweisender Organosiliciumverbindung,

(3) Kondensationskatalysator

und gegebenenfalls mindestens einem weiteren Stoff.

Unter Ausschluß von Wasser lagerfähige, bei Zutritt von Wasser bei Raumtemperatur zu Elastomeren vernetzende Massen, die bei der Vernetzung Essigsäure abspalten und organische Zinnverbindungen als Kondensationskatalysator enthalten, sind beispielsweise aus US-A 3 077 465 (ausgegeben 12. Februar 1963, L.B. Bruner et al., Dow Corning Corporation) bekannt. Da organische Zinnverbindungen toxisch sind, können derartig hergestellte Elastomere zum Beispiel nicht uneingeschränkt im Lebensmittelbereich eingesetzt werden.

Aus US-A 4 525 565 (ausgegeben 25 Juni 1985, B. Laisney et al., Rhone-Poulenc Specialites Chimiques) bzw. der korrespondierenden EP-B 102 268 sind unter Ausschluß von Wasser lagerfähige, bei Zutritt von Wasser bei Raumtemperatur zu Elastomeren vernetzende Massen bekannt, die durch Vermischen der folgenden Bestandteile hergestellt werden:

(A) endständige Hydroxygruppen aufweisendes Diorganopolysiloxan

(B) Silan mit je Molekül mindestens drei direkt an Silicium gebundenen Acyloxygruppen oder Oximgruppen

(C) organische Titanverbindung, die pro Titanatom mindestens einen Organosiliciumrest aufweist, der an das Titanatom über eine Bindung Ti-O-Si gebunden ist, als Kondensationskatalysator und

(D) Füllstoff.

Die organischen Titanverbindungen, wie Tetra(trimethylsiloxy)titan oder Bis(trimethylsiloxy)-dibutoxytitan, sind in den Einkomponenten-RTV-Massen löslich, d.h. die Vernetzung der Massen wird homogen katalysiert.

In DE-AS 20 57 730 (veröffentlicht am 16.Juni 1977, S. Läufer, Deutsche Gold-und Silber-Scheideanstalt vormals Roessler) bzw. der korrespondierenden US-A 4 164 509 ist ein Verfahren zur Hydrophobierung von feinteiligen Oxiden, beispielsweise pyrogener Kieselsäure, beschrieben, bei dem die feinteiligen Oxide mit Esterverbindungen behandelt werden und durch das Produkt trockenes Ammoniakgas geleitet wird. Als geeignete Esterverbindungen werden Alkoxysilane, wie Tetra-n-butoxy-silan, und die entsprechenden Verbindungen des Titans genannt.

In der US 3,845,161 werden RTV-Massen beschrieben, die mittels Mischens eines Titanchelatkatalysators mit einem Polydiorganosiloxan mit Silanol-Endgruppen, einem Silan und einem die Viskosität herabsetzenden OH-haltigen Silikonöl hergestellt werden.

Es bestand die Aufgabe, unter Ausschluß von Wasser lagerfähige, bei Zutritt von Wasser bei Raumtemperatur zu Elastomeren vernetzende Massen bereitzustellen, die einen Kondensationskatalysator enthalten, der deutlich weniger bis nicht toxisch ist, die Vernetzung der Massen unter heterogener Katalyse beschleunigt, dessen katalytische Aktivität auch durch Lagerung in Anwesenheit von Luftfeuchtigkeit über einen längeren Zeitraum nicht beeinträchtigt wird und der einfach handzuhaben und herzustellen ist. Die Aufgabe wird durch die Erfindung gelöst.

Gegenstand der Erfindung sind unter Ausschluß von Wasser lagerfähige, bei Zutritt von Wasser bei Raumtemperatur zu Elastomeren vernetzende Massen, hergestellt durch Vermischen von

(1) kondensationsfähige Endgruppen aufweisendem Organopolysiloxan mit

(2) je Molekül mindestens drei direkt an Silicium gebundene hydrolysierbare Gruppen aufweisender Organosiliciumverbindung,

(3) Kondensationskatalysator

und gegebenenfalls mindestens einem weiteren Stoff, dadurch gekennzeichnet, daß sie als (3) Kondensationskatalysator ein Umsetzungsprodukt von einem feinteiligen, anorganischen Oxid mit einer Teilchengröße von weniger als 10 µm mit einer mit dem Oxid reaktionsfähigen Titanverbindung enthalten.

Als Umsetzungsprodukt ist vorzugsweise solches enthalten, das durch Vermischen von einem feinteiligen, anorganischen Oxid mit einer reaktiven Titanverbindung in Mengen von 0,01 bis 50 Teilen, bevorzugt 0,1 bis 10 Teilen, Titanverbindung je 100 Teile feinteiliges anorganisches Oxid gegebenenfalls in Gegenwart von inertem organischem Lösungsmittel bei 0 bis 300 °C, bevorzugt 20 bis 100 °C, über einen Zeitraum von 1 Minute bis 24 Stunden, bevorzugt 15 bis 60 Minuten, hergestellt wird.

Die Herstellung des Umsetzungsprodukts erfolgt vorzugsweise beim Druck der umgebenden Atmosphäre, also bei etwa 1020 hPa (abs.); es können aber auch höhere oder niedrigere Drücke angewendet werden.

Die reaktive Titanverbindung kann als Lösung in einem inerten organischen Lösungsmittel eingesetzt werden. Auch das anorganische Oxid kann als Dispersion in einem inerten organischen Lösungsmittel eingesetzt werden.

Wird bei der Herstellung des Umsetzungsprodukts inertes, organisches Lösungsmittel mitverwendet, kann es von dem Umsetzungsprodukt, bei 0 bis 150 °C und 0,01 bis 1 000 hPa (abs.), vorzugsweise destillativ, entfernt werden.

Das erfindungsgemäße Umsetzungsprodukt ist ein pulverförmiger, unlöslicher, feinverteilter Feststoff. Mit unpolaren oder polaren Lösungsmitteln, wie z.B. Toluol oder Aceton, können aus diesem Umsetzungsprodukt keine freien Titanverbindungen extrahiert werden. Massen, die als Katalysator ein Umsetzungsprodukt mit freien und ungebundenen Titanverbindungen aufgrund von Überbeladung enthalten, neigen zur Vergelung und führen damit nicht zu brauchbaren Elastomeren.

Während organische Titanverbindungen, wie Tetra-n-butoxytitan, mit Luftfeuchtigkeit in kurzer Zeit zu katalytisch inaktivem Titandioxid hydrolysiert, behält das erfindungsgemäße Umsetzungsprodukt auch nach längerer Lagerung ohne besonderen Schutz gegen Luftfeuchtigkeit seine katalytische Aktivität. Auch die erfindungsgemäßen Massen sind unter Feuchtigkeitsausschluß lagerbeständig.

Zur Herstellung des erfindungsgemäßen Umsetzungsprodukts wird als feinteiliges anorganisches Oxid solches mit einer Teilchengröße von weniger als 10 µm, bevorzugt von weniger als 0,1 µm, eingesetzt.

Beispiele für feinteiliges anorganisches Oxid sind Siliciumdioxid, Aluminiumoxid, Titandioxid, Quarzmehl, Glimmer, Eisenoxid, Zinkoxid, Magnesiumoxid, Zirkondioxid, Silikate, wie Calciumsilikat oder Aluminiumsilikat.

Bevorzugte Beispiele für ein feinteiliges anorganisches Oxid sind Siliciumdioxide mit einer spezifischen Oberfläche von mindestens 50 $m^2/g$ (bestimmt durch Stickstoffadsorption gemäß ASTM Special Technical Publication No. 51, 1941, Seite 95 ff, also der sogenannten "BET-Methode"), vorzugsweise 50 bis 500 $m^2/g$, bevorzugt 100 bis 300 $m^2/g$, insbesondere pyrogen erzeugte Siliciumdioxide, unter Erhaltung der Struktur entwässerte Kieselsäurehydrogele, also sogenannte "Aerogele", und andere Arten von gefälltem Siliciumdioxid.

Zur Herstellung des Umsetzungsprodukts wird als mit dem Oxid reaktionsfähige Titanverbindung vorzugsweise solche der allgemeinen Formel

$TiX_4$

eingesetzt, wobei X einen Rest der Formel

-OR oder 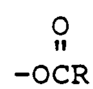

bedeutet, worin R einen Alkylrest mit 1 bis 12 Kohlenstoffatomen je Rest bedeutet,
oder ein Rest X einen Chelatliganden bedeutet, ausgewählt aus der Gruppe bestehend aus Acetylacetonaten,
$\beta$-di-Ketogruppen und $\beta$-Ketoestergruppen,
oder zwei Reste X zusammen einen zweiwertigen Alkohol als Chelatliganden bedeuten.

Als Acetylacetonate werden vorzugsweise solche der Formel

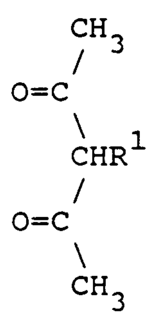

,

wobei $R^1$ ein Wasserstoffatom oder einen einwertigen Kohlenwasserstoffrest mit 1 bis 12 Kohlenstoffatomen je Rest bedeutet, verwendet.

Als zweiwertiger Alkohol wird vorzugsweise solcher der Formel

$$\begin{array}{l} HO-CHR^2 \\ \quad \backslash \\ \quad (CHR^2)_a \\ \quad / \\ HO-CHR^2 \end{array} \quad ,$$

wobei $R^2$ gleich oder verschieden ist, ein Wasserstoffatom oder einen einwertigen Kohlenwasserstoffrest mit 1 bis 12 Kohlenstoffatomen je Rest bedeutet und a 0, 1 oder 2 ist, verwendet.

Beispiele für Alkylreste R sind der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Undecylreste, wie der n-Undecylrest und Dodecylreste, wie der n-Dodecylrest. Ein bevorzugtes Beispiel für R ist der n-Butylrest.

Beispiele für Kohlenwasserstoffreste $R^1$ sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Undecylreste, wie der n-Undecylrest; Dodecylreste, wie der n-Dodecylrest; Alkenylreste, wie der Allylrest; Arylreste, wie der Phenylrest; Alkarylreste, wie o-, m-, p-Tolylreste; und Aralkylreste, wie der Benzylrest. Das bevorzugte Beispiel für $R^1$ ist das Wasserstoffatom.

Beispiele für Kohlenwasserstoffreste $R^2$ sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Undecylreste, wie der n-Undecylrest; Dodecylreste, wie der n-Dodecylrest; Alkenylreste, wie der Allylrest; rest; Arylreste, wie der Phenylrest; Alkarylreste, wie o-, m-, p-Tolylreste; und Aralkylreste, wie der Benzylrest. Bevorzugte Beispiele für $R^2$ sind das Wasserstoffatom oder der Methylrest.

Bei dem erfindungsgemäßen Umsetzungsprodukt sind Füllstoff und Kondensationskatalysator in einer Komponente vereint. Das erfindungsgemäße Umsetzungsprodukt von einem feinteiligen anorganischen Oxid mit einer reaktiven Titanverbindung kann mit einem hydrophob machenden Mittel, vorzugsweise einer Organosiliciumverbindung, hydrophobiert werden. Als Organosiliciumverbindung wird dabei bevorzugt solches der Formel

$R^3{}_{4-x}SiA_x$ oder $(R^3_3\,Si)_yB$ ,

worin $R^3$ gleich oder verschieden ist, einen einwertigen Kohlenwasserstoffrest mit 1 bis 18 Kohlenstoffatomen je Rest,

A Halogen, -OH, $-OR^4$ oder $-OCOR^4$,

B $NR^5{}_{3-y}$,

$R^4$ einen einwertigen Kohlenwasserstoffrest mit 1 bis 12 Kohlenstoffatomen je Rest,

$R^5$ ein Wasserstoffatom ist oder die gleiche Bedeutung wie $R^4$ hat,

x 1, 2 oder 3 und

y 1 oder 2 bedeutet,

oder Organo(poly)siloxane aus Einheiten der Formel

$R^3_Z\,SiO_{(4-z)/2}$

wobei $R^3$ die oben dafür angegebene Bedeutung hat und z 1, 2 oder 3 bedeutet.

Beispiele für Reste $R^3$ sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest;

Oktadecylreste, wie der n-Oktadecylrest; Alkenylreste, wie der Vinyl- und der Allylrest; Cycloalkylreste, wie Cyclopentyl-, Cyclohexyl-, Cycloheptylreste und Methylcyclohexylreste; Arylreste, wie der Phenyl-, Naphthyl- und Anthryl- und Phenanthrylrest; Alkarylreste, wie o-, m-, p-Tolylreste, Xylylreste und Ethylphenylreste; und Aralkylreste, wie der Benzylrest, der alpha- und der $\beta$-Phenylethylrest.

Beispiele für Reste $R^4$ sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Arylreste, wie der Phenylrest; Alkarylreste, wie o-, m-, p-Tolylreste und Aralkylreste, wie der Benzylrest. Bevorzugte Beispiele für $R^4$ sind der Methyl- und Ethylrest.

Beispiele für Organosiliciumverbindungen sind Alkylchlorsilane, wie Methyltrichlorsilan, Dimethyldichlorsilan, Trimethylchlorsilan, Octyltrichlorsilan, Octadecyltrichlorsilan, Octylmethyldichlorsilan, Octadecylmethyldichlorsilan, Octyldimethylchlorsilan, Octadecyldimethylchlorsilan, tert.-Butyldimethylchlorsilan; Alkylalkoxysilane, wie Dimethyldimethoxysilan, Dimethyldiethoxysilan, Trimethylmethoxysilan und Trimethylethoxysilan; Trimethylsilanol; cyclische Diorgano(poly)siloxane, wie cyclische Dimethyl(poly)siloxane und lineare Diorganopolysiloxane, wie durch Trimethylsiloxygruppen endblockierte Dimethylpolysiloxane und endständige Hydroxy- oder Alkoxygruppen aufweisende Dimethylpolysiloxane.

Die hydrophobierten anorganischen Oxide enthalten vorzugsweise 1 bis 10 Gew.-% Organosiliciumverbindungen.

Verfahren zur Hydrophobierung sind beispielsweise in der DE-AS 11 63 784 beschrieben.

Als inertes, organisches Lösungsmittel werden vorzugsweise gesättigte Kohlenwasserstoffe, wie Pentan, Hexan, Heptan, Decan oder deren Gemische, wie Mineralöle, oder aromatische Kohlenwasserstoffe, wie Toluol, Xylol, Ethylbenzol oder deren Gemische, oder aliphatische Alkohole, wie Methanol, Ethanol, Propanol, Butanol, Pentanol, Hexanol oder Octanol oder deren Gemische verwendet.

Der Kondensationskatalysator (3) wird in einer Menge von vorzugsweise 0,01 bis 100 Teilen, bevorzugt 0,1 bis 50 Teilen, jeweils je 100 Teile Organopolysiloxan (1) eingesetzt.

Als (1) kondensationsfähige Endgruppen aufweisendes Organopolysiloxan wird vorzugsweise solches der allgemeinen Formel

$$HO(SiR^6_2O)_mSiR^6_2OH ,$$

wobei $R^6$ gleiche oder verschiedene, gegebenfalls halogenierte einwertige Kohlenwasserstoffreste oder Cyanalkylreste mit jeweils 1 bis 18 Kohlenstoffatomen je Rest bedeuten und m eine ganze Zahl im Wert von mindestens 10 ist, verwendet.

Innerhalb der bzw. entlang der Siloxanketten der vorstehend angegebenen Formel können, was bei derartigen Formeln üblicherweise nicht dargestellt wird, zusätzlich zu den Diorganosiloxaneinheiten ($SiR^6_2O$) noch andere Siloxaneinheiten vorliegen. Beispiele für solche anderen, meist lediglich als Verunreinigungen vorliegenden Siloxaneinheiten sind solche der Formeln $R^6SiO_{3/2}$, $R^6_3SiO_{1/2}$ und $SiO_{4/2}$, wobei $R^6$ jeweils die oben dafür angegebene Bedeutung hat. Die Menge an solchen anderen Siloxaneinheiten als Diorganosiloxaneinheiten beträgt jedoch vorzugsweise höchstens 10 Molprozent, insbesondere höchstens 1 Molprozent, jeweils bezogen auf das Gewicht der Organopolysiloxane (1).

Die Organopolysiloxane (1) besitzen vorzugsweise eine Viskosität von 100 bis 500 000 mPas bei 25°C.

Es kann eine Art von Organopolysiloxan (1) oder ein Gemisch aus mindestens zwei Arten von Organopolysiloxan (1) eingesetzt werden.

Beispiele für Reste $R^6$ sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Oktadecylreste, wie der n-Oktadecylrest; Alkenylreste, wie der Vinyl- und der Allylrest; Cycloalkylreste, wie Cyclopentyl-, Cyclohexyl-, Cycloheptylreste und Methylcyclohexylreste; Arylreste, wie der Phenyl-, Naphthyl- und Anthryl- und Phenanthrylrest; Alkarylreste, wie o-, m-, p-Tolylreste, Xylylreste und Ethylphenylreste und Aralkylreste, wie der Benzylrest, der alpha- und der $\beta$-Phenylethylrest.

Beispiele für substituierte Reste $R^6$ sind Cyanalkylreste, wie der $\beta$-Cyanethylrest und halogenierte Kohlenwasserstoffreste, beispielsweise Halogenalkylreste, wie der 3,3,3-Trifluor-n-propylrest, der 2,2,2,2',2',2'-Hexafluorisopropylrest und der Heptafluorisopropylrest und Halogenarylreste, wie der o-, m-, und p-Chlorphenylrest.

Ein bevorzugtes Beispiel für den Rest $R^6$ ist der Methylrest.

Als (2) je Molekül mindestens drei direkt an Silicium gebundene hydrolysierbare Gruppen aufweisende Organosiliciumverbindung wird vorzugsweise Silan der allgemeinen Formel

$R^6_n SiZ_{4-n}$

oder dessen 2 bis 10 Siliciumatome je Molekül aufweisendes Teilhydrolysat verwendet,
wobei $R^6$ die oben dafür angegebene Bedeutung hat,
n 3 oder 4 ist und
Z gleiche oder verschiedene hydrolysierbare Gruppen bedeuten und ausgewählt sind aus der Gruppe bestehend aus

| | |
|---|---|
| Acyloxygruppen | $-OCOR^7$ und |
| Kohlenwasserstoffoxygruppen | $-OR^8$ , |

worin $R^7$ einen einwertigen Kohlenwasserstoffrest mit 1 bis 12 Kohlenstoffatomen je Rest und
$R^8$ einen Alkylrest mit 1 bis 4 Kohlenstoffatomen je Rest, der durch ein Ethersauerstoffatom substituiert sein kann, bedeutet.

Als hydrolysierbare Gruppe Z ist die Acyloxygruppe bevorzugt.

Die Organosiliciumverbindung (2) wird vorzugsweise in einer Menge von 2 bis 10 Teilen je 100 Teile Organopolysiloxan (1) eingesetzt.

Beispiele für Reste $R^7$ sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Cycloalkylreste, wie Cyclopentyl-, Cyclohexyl-, Cycloheptylreste und Methylcyclohexylreste; Arylreste, wie der Phenyl- und der Naphthylrest; Alkarylreste, wie o-, m-, p-Tolylreste, Xylylreste und Ethylphenylreste und Aralkylreste, wie der Benzylrest, der alpha- und der $\beta$-Phenylethylrest.

Ein bevorzugtes Beispiel für den Rest $R^7$ ist der Methylrest.

Beispiele für Alkylreste $R^8$ sind Methyl-, Ethyl-, n-Propyl-, iso-Propyl-, 1-n-Butyl-, 2-n-Butyl-, iso-Butyl- und tert.-Butylreste. Beispiele für Alkylreste $R^8$, die durch ein Ethersauerstoffatom substituiert sind, sind der Ethoxymethyl-, 2-Methoxyethyl-, 2-Ethoxyethyl- und Propoxymethylrest. Bevorzugte Beispiele für $R^8$ sind der Methyl- und Ethylrest.

Es kann eine Art von Silan oder auch ein Gemisch aus mindestens zwei Arten von Silanen oder dessen Teilhydrolysate eingesetzt werden.

Zusätzlich zu den Komponenten (1), (2) und (3) können die erfindungsgemäßen Massen gegebenenfalls weitere Stoffe enthalten. Beispiele für weitere Stoffe sind Füllstoffe, wie verstärkende und nicht verstärkende Füllstoffe, Weichmacher, Pigmente, lösliche Farbstoffe, Duftstoffe, Fungicide, harzartige Organopolysiloxane, rein organische Harze, Korrosionsinhibitoren, Oxidationsinhibitoren, Hitzestabilisatoren, Lösungsmittel, Mittel zur Beeinflussung der elektrischen Eigenschaften, wie leitfähiger Ruß, flammabweisend machende Mittel, Lichtschutzmittel und Mittel zur Verlängerung der Hautbildungszeit.

Beispiele für Füllstoffe sind verstärkende Füllstoffe, also Füllstoffe mit einer spezifischen Oberfläche nach BET von mindestens 50 $m^2/g$, vorzugsweise 50 - 500 $m^2/g$, wie pyrogen erzeugte Siliciumdioxide, unter Erhalt der Struktur entwässerte Kieselsäurehydrogele, also sogenannte "Aerogele", und andere Arten von gefälltem Siliciumdioxid; und nicht verstärkende Füllstoffe, also Füllstoffe mit einer spezifischen Oberfläche nach BET von weniger als 50 $m^2/g$, wie Quarzmehl, Diatomeenerde, Calciumsilikat, Zirkoniumsilikat, Zeolithe, Eisenoxid, Zinkoxid, Titandioxid, Aluminiumoxid, Calciumcarbonat, Magnesiumcarbonat, Zinkcarbonat, Ruß, Glimmer und Kreide. Die genannten Füllstoffe können hydrophobiert sein durch die Behandlung mit hydrophob machenden Mitteln, beispielsweise durch die Behandlung mit Organosilanen, -silazanen, oder -siloxanen. Es kann eine Art von Füllstoff, es kann aber auch ein Gemisch von mindestens zwei Füllstoffen eingesetzt werden.

Der Füllstoff wird in Mengen von vorzugsweise 0 bis 200 Teilen, bevorzugt 0 bis 50 Teilen, jeweils je 100 Teile Organopolysiloxan (1) eingesetzt.

Beispiele für Weichmacher sind bei Raumtemperatur flüssige, durch Triorganosiloxygruppen endblockierte Diorganopolysiloxane, wie durch Trimethylsiloxygruppen endblockierte Dimethylpolysiloxane mit einer Viskosität von 10 bis 10 000 mPas bei 25 °C.

Der Weichmacher wird in Mengen von vorzugsweise 0 bis 50 Teilen, bevorzugt 0 bis 10 Teilen, jeweils je 100 Teile Organopolysiloxan (1), eingesetzt.

Zur Herstellung der erfindungsgemäßen Massen können alle Bestandteile der jeweiligen Masse in beliebiger Reihenfolge miteinander vermischt werden. Dieses Vermischen erfolgt vorzugsweise bei Raumtemperatur und vorzugsweise wird bei diesem Vermischen der Zutritt von Wasser vermieden. Falls

gewünscht, kann dieses Vermischen aber auch bei höheren Temperaturen erfolgen, z.B. bei einer Temperatur im Bereich von 25 bis 80 °C.

Für die Vernetzung der erfindungsgemäßen Massen reicht der übliche Wassersgehalt der Luft aus. Die Vernetzung kann, falls erwünscht, auch bei höheren Temperaturen als Raumtemperatur, z.B. bei 25 bis 120 °C, oder bei niedrigeren Temperaturen als Raumtemperatur, z.B. bei -10 bis 25 °C, durchgeführt werden. Ebenso kann die Vernetzung auch bei Konzentrationen von Wasser durchgeführt werden, die den normalen Wassergehalt der Luft übersteigen.

Die erfindungsgemäßen Massen eignen sich als Abdichtungsmassen für Fugen, einschließlich senkrecht verlaufender Fugen und ähnlicher Leerräume mit lichten Weiten von z.B. 10 bis 40 mm, beispielsweise von Gebäuden, Land-, Wasser- und Luftfahrzeugen, oder als Klebstoffe und Verkittungsmassen, z.B. im Fensterbau, oder zur Herstellung von Schutzüberzügen, einschließlich solcher für Oberflächen, die der ständigen Einwirkung von Süßwasser oder Meerwasser ausgesetzt sind, oder zur Herstellung von klebrige Stoffe abweisenden Überzügen, einschließlich solcher für Substrate, die in Kontakt mit Lebensmitteln gelangen, beispielsweise Verpackungsmaterial, das für Lagerung und/oder Transport von klebrigen Lebensmitteln, wie Kuchen, Honig, Süßwaren und Fleisch, bestimmt ist, oder auch für andere Anwendungen, bei denen die bisher bekannten, bei Raumtemperatur zu Elastomeren vernetzenden Massen eingesetzt werden konnten, wie zur Isolierung von elektrischen oder elektronischen Vorrichtungen.

Herstellung der Kondensationskatalysatoren:

A. Zu 100 g einer pyrogenen Kieselsäure mit einer spezifischen Oberfläche nach BET von 150 $m^2/g$ werden unter Rühren 1 g monomeres Tetra-n-butoxytitan, das in 1 g n-Hexan gelöst ist, sowie 10 g Hexamethyldisilazan bei 25 °C zugemischt. Nach 30 Minuten Homogenisieren bei 25 °C wird das Lösungsmittel bei 30 °C und 1 hPa (abs.) destillativ entfernt und es wird ein weißes Pulver erhalten.

B. Die Arbeitsweise von A wird wiederholt mit der Abänderung, daß 1 g Tetra-iso-propoxytitan anstelle von 1 g Tetra-n-butoxytitan eingesetzt wird. Es wird ein weißes Pulver erhalten.

C. Die Arbeitsweise von A wird wiederholt mit der Abänderung, daß 1 g Bis-(acetylacetonat)-di-iso-propoxytitan, das in 2 g iso-Propanol gelöst ist, anstelle von 1 g Tetra-n-butoxytitan eingesetzt wird. Die Mischung wird nach einer Stunde Homogenisieren bei 25 °C zusätzlich 2 Stunden bei 80 °C im Trockenschrank getempert. Es wird ein weißes Pulver erhalten.

D. Zu 100 g einer pyrogenen Kieselsäure mit einer spezifischen Oberfläche nach BET von 150 $m^2/g$ werden unter Rühren 5 g monomeres Tetra-n-butoxytitan, das in 5 g Mineralöl (käuflich erwerblich unter dem Handelsnamen "Kristallöl K 30" bei der Fa. Shell) gelöst ist, bei 25 °C zugemischt. Nach 30 Minuten Homogenisieren bei 25 °C wird ein weißes Pulver erhalten.

E. Die Arbeitsweise von D wird wiederholt mit der Abänderung, daß 25 g Tetra-n-butoxytitan, das in 25 g Mineralöl gelöst ist, anstelle von 5 g Tetra-n-butoxytitan, das in 5 g Mineralöl gelöst ist, eingesetzt wird. Es wird ein weißes Pulver erhalten.

F. Die Arbeitsweise von D wird wiederholt mit der Abänderung, daß hydrophobierte pyrogene Kieselsäure mit einer spezifischen Oberfäche nach BET von 150 $m^2/g$ (käuflich erwerblich unter dem Handelsnamen "HDK H20" bei der Fa. Wacker-Chemie GmbH), die an der Oberfläche chemisch gebundene Dimethylsiloxygruppen durch Behandlung mit Dimethyldichlorsilan aufweist, eingesetzt wird und kein Mineralöl mitverwendet wird. Es wird ein weißes Pulver erhalten.

G. Die Arbeitsweise von D wird wiederholt mit der Abänderung, daß zusätzlich 5 g eines durch Trimethylsiloxygruppen endblockierten Dimethylpolysiloxans mit einer Viskosität von 10 mPas bei 25 °C zu der pyrogenen Kieselsäure zugemischt wird und kein Mineralöl mitverwendet wird. Es wird ein weißes Pulver erhalten.

H. Zu einer Suspension von 100 g einer gefällten Kieselsäure mit einer spezifischen Oberfläche nach BET von 170 $m^2/g$ (käuflich erwerblich unter dem Handelsnamen "Ultrasil VN3" bei der Fa. Degussa) in 1 000 g n-Hexan werden 10 g monomeres Tetra-n-butoxytitan bei 25 °C zugetropft. Nach einer Stunde Homogenisieren bei 25 °C wird das n-Hexan bei 30 °C und 100 hPa (abs.) destillativ entfernt und es wird ein weißes Pulver erhalten.

I. Die Arbeitsweise von H wird wiederholt mit der Abänderung, daß 100 g feinteiliges Quarzmehl (käuflich erwerblich unter dem Handelsnamen "Silbond 600 TST" bei der Fa. Quarzwerke Frechen) anstelle von 100 g gefällter Kieselsäure und 1 g anstelle von 10 g Tetra-n-butoxytitan eingesetzt wird. Es wird ein weißes Pulver erhalten.

K. Die Arbeitweise von H wird wiederholt mit der Abänderung, daß 100 g Farbpigment Eisenoxid Rot (käuflich erwerblich unter dem Handelsnamen "Eisenoxid Rot" bei der Fa. Bayer) anstelle von 100 g gefällter Kieselsäure und 1 g anstelle von 10 g Tetra-n-butoxytitan eingesetzt wird. Es wird ein rotes

Pulver erhalten.

Die Analysedaten der Pulver A bis K (nach Trocknen der Pulver bei 30 °C und 1 hPa über einen Zeitraum von 2 Stunden) sind in Tabelle 1 zusammengefaßt.

Tabelle 1

| Katalysator | Kohlenstoffgehalt[Gew.-%] | Titangehalt [Gew.-%] | Wasserbenetzbarkeit |
|---|---|---|---|
| A | 2,3 | 0,2 | nein |
| B | 2,2 | 0,3 | nein |
| C | 2,5 | 0,2 | nein |
| D | 1,3 | 0,8 | ja |
| E | 5,1 | 3,9 | ja |
| F | 1,6 | 0,9 | nein |
| G | 2,5 | 0,7 | nein |
| H | 3,4 | 1,4 | ja |
| I | 0,2 | 0,2 | ja |
| K | 0,2 | 0,2 | ja |

Die Pulver A bis K werden jeweils mit Toluol bzw. Aceton extrahiert und der lösliche Anteil an Titan wird bestimmt. Die Ergebnisse sind in Tabelle 2 zusammengefaßt.

Tabelle 2

| Katalysator | Extraktion mit Toluol Titan in mg/g $SiO_2$ | Extraktion mit Aceton Titan in mg/g $SiO_2$ |
|---|---|---|
| A | < 0,01 | < 0,01 |
| B | < 0,01 | < 0,01 |
| C | < 0,01 | < 0,01 |
| D | < 0,01 | < 0,01 |
| E | 0,15 | 0,16 |
| F | < 0,01 | < 0,01 |
| G | < 0,01 | < 0,01 |
| H | < 0,01 | < 0,01 |
| I | < 0,01 | < 0,01 |
| K | < 0,01 | < 0,01 |

Beispiele 1 bis 3:

Zu einem Gemisch aus 40 g eines α,ω-Dihydroxydimethylpolysiloxans mit einer Viskosität von 80 000 mPa.s bei 25 °C, 20 g eines α,ω-Dihydroxydimethylpolysiloxans mit einer Viskosität von 20 000 mPa.s bei 25 °C und 50 g eines α,ω-Dihydroxydimethylpolysiloxans mit einer Viskosität von 1 000 mPa.s bei 25 °C werden bei 25 °C unter Ausschluß von Feuchtigkeit 5 g Ethyltriacetoxysilan und jeweils 20 g des Katalysators A, B oder C in einem Labormischer zugefügt. Es werden Proben in 2 mm dicken Schichten auf einer glatten Unterlage bei 25 °C und 50 % relativer Luftfeuchtigkeit insgesamt 14 Tage vernetzen und lagern gelassen. Es wird die Hautbildungszeit bestimmt, d.h. die Zeit, die verstreicht, bis sich auf den Proben eine Haut gebildet hat. Dann werden bei diesen Elastomeren Shore-A-Härte nach DIN 53505, Reißfestigkeit und Reißdehnung nach DIN 53504 mit Normstab S 3A bestimmt. Die Ergebnisse sind in Tabelle 3 zusammengefaßt.

Beispiele 4 bis 10:

Zu einem Gemisch aus 40 g eines α,ω-Dihydroxydimethylpolysiloxans mit einer Viskosität von 80 000 mPa.s bei 25 °C, 20 g eines α,ω-Dihydroxydimethylpolysiloxans mit einer Viskosität von 20 000 mPa.s bei 25 °C, 50 g eines α,ω-Dihydroxydimethylpolysiloxans mit einer Viskosität von 1 000 mPa.s bei 25 °C und 20 g pyrogener Kieselsäure mit einer spezifischen Oberfläche nach BET von 150 $m^2/g$, die durch Behandlung

mit Hexamethyldisilazan hydrophobiert wurde, werden bei 25 °C unter Ausschluß von Feuchtigkeit 5 g Ethyltriacetoxysilan und jeweils 2 g des Katalysators D bis K in einem Labormischer zugefügt. Es werden Proben in 2 mm dicken Schichten auf einer glatten Unterlage bei 25 °C und 50 % relativer Luftfeuchtigkeit insgesamt 14 Tage vernetzen und lagern gelassen. Es wird die Hautbildungszeit bestimmt, d.h. die Zeit, die verstreicht bis sich auf den Proben eine Haut gebildet hat. Dann werden bei diesen Elastomeren Shore-A-Härte nach DIN 53505, Reißfestigkeit und Reißdehnung nach DIN 53504 mit Normstab S 3A bestimmt. Die Ergebnisse sind in Tabelle 3 zusammengefaßt.

Tabelle 3

| Beispiel | Hautbildungszeit [min] | Shore-A Härte | Reißfestigkeit [N/mm$^2$] | Reißdehnung [%] |
|---|---|---|---|---|
| 1 | 10 | 35 | 2,6 | 330 |
| 2 | 11 | 30 | 2,2 | 350 |
| 3 | 12 | 31 | 2,3 | 320 |
| 4 | 14 | 31 | 2,1 | 380 |
| 5*) | - | - | - | - |
| 6 | 11 | 34 | 2,6 | 330 |
| 7 | 10 | 31 | 2,2 | 320 |
| 8 | 9 | 36 | 2,3 | 290 |
| 9 | 14 | 24 | 2,2 | 390 |
| 10 | 15 | 22 | 2,1 | 400 |

*)Die Mischung geliert bereits vor Zutritt von Feuchtigkeit

Beispiel 11:

Es wird eine Mischung mit Katalysator A, wie unter Beispiel 1 beschrieben, hergestellt. Die Masse wird unter Ausschluß von Feuchtigkeit bei 50 °C einen Monat bzw. bei 25 °C ein Jahr gelagert. Die Vernetzung der Masse, die Bestimmung der Hautbildungszeit und die Bestimmung der mechanischen Werte des Elastomers erfolgt dann wie unter Beispiel 1 beschrieben. Die Ergebnisse sind in Tabelle 4 zusammengefaßt.

Tabelle 4

| Lagerung der Masse | Hautbildungszeit [min] | Shore-A Härte | Reißfestigkeit [N/mm$^2$] | Reißdehnung [%] |
|---|---|---|---|---|
| 1 Monat bei 50 °C | 10 | 29 | 2,3 | 320 |
| 1 Jahr bei 25 °C | 9 | 28 | 2,3 | 340 |

Beispiel 12:

Der Katalysator A wird 1 Jahr bei 25 °C in einem verschlossenen Gebinde, jedoch ohne besonderen Schutz gegen Feuchtigkeit, gelagert. Anschließend wird eine Mischung, wie unter Beispiel 1 beschrieben, hergestellt. Die Vernetzung der Masse, die Bestimmung der Hautbildungszeit und die Bestimmung der mechanischen Werte des Elastomers erfolgt dann wie unter Beispiel 1 beschrieben. Die Ergebnisse sind in Tabelle 5 zusammengefaßt.

Tabelle 5

| Lagerung des Kat. A | Hautbildungszeit [min] | Shore-A Härte | Reißfestigkeit [N/mm$^2$] | Reißdehnung [%] |
|---|---|---|---|---|
| 1 Jahr bei 25 °C | 9 | 30 | 2,3 | 350 |

## Patentansprüche

**1.** Unter Ausschluß von Wasser lagerfähige, bei Zutritt von Wasser bei Raumtemperatur zu Elastomeren vernetzende Massen, hergestellt durch Vermischen von

(1) kondensationsfähige Endgruppen aufweisendem Organopolysiloxan mit

(2) je Molekül mindestens drei direkt an Silicium gebundene hydrolysierbare Gruppen aufweisender Organosiliciumverbindung,

(3) Kondensationskatalysator

und gegebenenfalls mindestens einem weiteren Stoff, dadurch gekennzeichnet, daß sie als (3) Kondensationskatalysator ein Umsetzungsprodukt von einem feinteiligen, anorganischen Oxid mit einer Teilchengröße von weniger als 10 µm mit einer mit dem Oxid reaktionsfähigen Titanverbindung enthalten.

**2.** Massen nach Anspruch 1, dadurch gekennzeichnet, daß als Umsetzungsprodukt solches enthalten ist, das durch Vermischen von einem feinteligen, anorganischen Oxid mit einer reaktiven Titanverbindung in Mengen von 0,01 bis 50 Teilen Titanverbindung je 100 Teile feinteiliges anorganisches Oxid gegebenenfalls in Gegenwart von inertem organischen Lösungsmittel bei 0 bis 300 °C über einen Zeitraum von 1 Minute bis 24 Stunden hergestellt wird.

**3.** Massen nach Anspruch 1 oder 2, dadurch gekennzeichnet, daß als feinteiliges anorganisches Oxid Siliciumdioxid mit einer spezifischen Oberfläche von mindestens 50 m$^2$/g (BET) verwendet wird.

**4.** Massen nach einem der Ansprüche 1 bis 3, dadurch gekennzeichnet, daß als Umsetzungsprodukt solches, das durch Umsetzung mit einer Organosiliciumverbindung hydrophobiert wurde, verwendet wird.

**5.** Massen nach einem der Ansprüche 1 bis 4, dadurch gekennzeichnet, daß als mit dem Oxid reaktionsfähige Titanverbindung solche der allgemeinen Formel

$TiX_4$

verwendet wird, wobei X einen Rest der Formel

$$-OR \quad \text{oder} \quad -O\overset{O}{\overset{\|}{C}}R$$

bedeutet, worin R einen Alkylrest mit 1 bis 12 Kohlenstoffatomen je Rest bedeutet, oder ein Rest X einen Chelatliganden bedeutet, ausgewählt aus der Gruppe bestehend aus Acetylacetonaten, $\beta$-di-Ketogruppen und $\beta$-Ketoestergruppen, oder zwei Reste X zusammen einen zweiwertigen Alkohol als Chelatliganden bedeuten.

**6.** Massen nach einem der Ansprüche 1 bis 5, dadurch gekennzeichnet, daß als (1) kondensationsfähige Endgruppen aufweisendes Organopolysiloxan solches der allgemeinen Formel

$HO(SiR^6_2O)_mSiR^6_2OH$ ,

wobei $R^6$ gleiche oder verschiedene, gegebenenfalls halogenierte einwertige Kohlenwasserstoffreste und Cyanalkylreste mit jeweils 1 bis 18 Kohlenstoffatomen je Rest bedeuten und m eine ganze Zahl im Wert von mindestens 10 ist, verwendet wird.

7. Massen nach einem der Ansprüche 1 bis 6, dadurch gekennzeichnet, daß als (2) Organosiliciumverbindung Silan der allgemeinen Formel

$R^6{}_{4-n}SiZ_n$

oder dessen 2 bis 10 Siliciumatome je Molekül aufweisendes Teilhydrolysat verwendet wird,
wobei $R^6$ gleiche oder verschiedene, gegebenenfalls halogenierte einwertige Kohlenwasserstoffreste und Cyanalkylreste mit jeweils 1 bis 18 Kohlenstoffatomen je Rest bedeuten,
n 3 oder 4 ist und
Z gleiche oder verschiedene hydrolysierbare Gruppen bedeuten und ausgewählt sind aus der Gruppe bestehend aus
Acyloxygruppen $-OCOR^7$ und
Kohlenwasserstoffoxygruppen $-OR^8$ ,
worin $R^7$ einen einwertigen Kohlenwasserstoffrest mit 1 bis 12 Kohlenstoffatomen je Rest und
$R^8$ einen Alkylrest mit 1 bis 4 Kohlenstoffatomen je Rest, der durch ein Ethersauerstoffatom substituiert sein kann, bedeutet.

## Claims

1. Composition which has a long shelf life in the absence of water, but crosslinks in the presence of water at room temperature to give elastomers and is prepared by mixing
(1) an organopolysiloxane containing condensable terminal groups with
(2) an organosilicon compound containing per molecule at least three hydrolysable groups bonded directly to silicon,
(3) a condensation catalyst
and, if desired, at least one further substance, characterized in that the condensation catalyst (3) is a product of the reaction of a finely divided, inorganic oxide having a particle size of less than 10 µm with a titanium compound capable of reacting with the oxide.

2. Composition according to Claim 1, characterized in that the reaction product is prepared by mixing a finely divided, inorganic oxide with a reactive titanium compound in amounts of from 0.01 to 50 parts of titanium compound per 100 parts of finely divided inorganic oxide, if desired in the presence of an inert organic solvent, at from 0 to 300 °C for a period of from 1 minute to 24 hours.

3. Composition according to Claim 1 or 2, characterized in that the finely divided inorganic oxide used is silicon dioxide having a specific surface area of at least 50 $m^2/g$ (BET).

4. Composition according to any of Claims 1 to 3, characterized in that the reaction product used has been rendered hydrophobic by reaction with an organosilicon compound.

5. Composition according to any of Claims 1 to 4, characterized in that the titanium compound capable of reacting with the oxide used has the general formula

$TiX_4$

where X is a radical of the formula

$-OR$ or 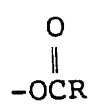

in which R is an alkyl radical having 1 to 12 carbon atoms per radical,
or one radical X is a chelate ligand selected from the group consisting of acetylacetonates, β-diketo groups and β-ketoester groups,
or two radicals X together are a dihydric alcohol as chelate ligand.

6. Composition according to any of Claims 1 to 5, characterized in that the organopolysiloxane (1) containing condensable terminal groups has the general formula

$HO(SiR^6_2O)_mSiR^6_2OH$ ,

where the radicals $R^6$ are identical or different, halogenated or unhalogenated monovalent hydrocarbon radicals and cyanoalkyl radicals, each having 1 to 18 carbon atoms per radical, and m is an integer having a value of at least 10.

7. Composition according to any of Claims 1 to 6, characterized in that the organosilicon compound (2) is a silane of the general formula

$R^6{}_{4-n}SiZ_n$

or a partial hydrolysate thereof containing 2 to 10 silicon atoms per molecule,
where the $R^6$ radicals are identical or different, halogenated or unhalogenated monovalent hydrocarbon radicals and cyanoalkyl radicals, each having 1 to 18 carbon atoms per radical,
n is 3 or 4, and
the Z radicals are identical or different hydrolysable groups and are selected from the group consisting of

acyloxy groups $-OCOR^7$ and
hydrocarbonoxy groups $-OR^8$,
in which $R^7$ is a monovalent hydrocarbon radical having 1 to 12 carbon atoms per radical, and
$R^8$ is an alkyl radical which has 1 to 4 carbon atoms per radical and may be substituted by an ether oxygen atom.

**Revendications**

1. Masses aptes au stockage à l'abri de l'eau, réticulant à température ambiante en élastomères lors de l'accès d'eau, préparées par mélange :
(1) d'organopolysiloxane présentant des groupes terminaux aptes à condensation avec
(2) un composé organosilicié présentant au moins trois groupes hydrolysables par molécule, liés directement sur le silicium,
(3) un catalyseur de condensation
et éventuellement avec au moins une autre matière caractérisées en ce qu'elles contiennent en tant que catalyseur de condensation (3) un produit de réaction d'un oxyde minéral finement divisé, ayant une granulométrie inférieure à 10 µm, avec un composé de titane réactif avec l'oxyde.

2. Masses selon la revendication 1, caractérisées en ce qu'elles contiennent en tant que produit de réaction, un produit que l'on prépare par mélange d'un oxyde minéral finement divisé avec un composé réactif de titane en quantité de 0,01 à 50 parties de composé de titane pour 100 parties d'oxyde minéral finement divisé, éventuellement en présence d'un solvant organique inerte, à des températures de 0 à 300 °C pendant une durée de 1 minute à 24 heures.

3. Masses selon la revendication 1 ou 2, caractérisées en ce qu'on utilise en tant qu'oxyde minéral finement divisé, le dioxyde de silicium ayant une surface spécifique d'au moins 50 $m^2/g$ (BET).

4. Masses selon l'une des revendications 1 à 3, caractérisées en ce qu'on utilise en tant que produit de réaction un produit que l'on hydrophobise par réaction avec un composé organosilicié.

5. Masses selon l'une des revendications 1 à 4, caractérisées en ce qu'on utilise en tant que composé de titane réactif avec l'oxyde, un composé répondant à la formule générale

$TiX_4$

X représentant un radical de formule

$$-OR \quad ou \quad -\overset{O}{\overset{\|}{C}}R$$

où R représente un radical alkyle comportant de 1 à 12 atomes de carbone par radical
ou un radical X signifie un ligand chélate, choisi dans le groupe composé des acétylacétonates, groupes $\beta$-di-céto et $\beta$-cétoester,
ou deux radicaux X ensemble, représentent un alcool bivalent en tant que ligand chélate.

**6.** Masses selon l'une des revendications 1 à 5, caractérisées en ce qu'on utilise en tant qu'organopolysiloxane (1) présentant des groupes terminaux aptes à la condensation
ceux qui répondent à la formule

$HO(SiR^6_2\,O)_mSiR^6_2\,OH$ ,

les radicaux $R^6$ étant identiques ou différents, représentent des radicaux hydrocarbonés monovalents éventuellement halogénés et des radicaux cyanalkyle comportant chaque fois de 1 à 18 atomes de carbone par radical et m représentant un nombre entier ayant une valeur d'au moins 10.

**7.** Masses selon l'une des revendications 1 à 6, caractérisées en ce qu'on utilise en tant que composé organosilicié (2) un silane de formule générale

$R^6{}_{4-n}SiZ_n$

ou son hydrolysat partiel présentant de 2 à 10 atomes de silicum par molécule, les radicaux $R^6$ étant identiques ou différents, représentant des radicaux hydrocarbonés monovalents éventuellement halogénés et des radicaux cyanalkyle comportant chaque fois de 1 à 18 atomes de carbone par radical,
n représentant 3 ou 4, et
Z représentant des groupes hydrolysables identiques ou différents et choisis dans le groupe composé de

groupes acyloxy -$OCOR^7$ et
groupes hydrocarbonés oxygénés -$OR^8$

où $R^7$ représente un radical hydrocarboné monovalent comportant de 1 à 12 atomes de carbone par radical et $R^8$ représente un radical alkyle comportant de 1 à 4 atomes de carbone par radical, pouvant être substitué par un atome d'oxygène d'éther.